# EUROPÄISCHE PATENTSCHRIFT

(11) **EP 4 624 338 B1**
(45) Veröffentlichungstag und Bekanntmachung des Hinweises auf die Patenterteilung: **15.07.2026**
(21) Anmeldenummer: 24218515.5
(22) Anmeldetag: 09.12.2024
(51) Int. Cl.: F41H 11/00, F42B 12/40, B64G 1/10, F42B 12/46, F42B 15/00

(54) **VORRICHTUNG ZUM ENTGEGENWIRKEN GEGEN EIN ZIELOBJEKT IM WELTRAUM, SYSTEM UND VERWENDUNG DER VORRICHTUNG**
APPARATUS FOR COUNTERACTING A TARGET OBJECT IN SPACE, SYSTEM AND USE OF THE APPARATUS
DISPOSITIF DE CONTRE-MESURE CONTRE UN OBJET CIBLE SPATIAL, SYSTÈME ET UTILISATION DU DISPOSITIF

(30) Priorität: 27.03.2024 DE 102024000995
(43) Veröffentlichungstag der Anmeldung: 01.10.2025
(73) Patentinhaber: MBDA Deutschland GmbH, 86529 Schrobenhausen (DE)
(72) Erfinder: NEBEL, Florian, 85298 Scheyern (DE)
(74) Vertreter: Isarpatent

(56) Entgegenhaltungen:
- EP-B1- 0 718 590
- EP-B1- 1 989 501
- DE-A1- 102012 006 553
- US-A1- 2012 241 562
- US-B1- 8 575 526

## Beschreibung

### TECHNISCHES GEBIET DER ERFINDUNG

Die vorliegende Erfindung betrifft eine Vorrichtung zum Entgegenwirken gegen ein Zielobjekt im Weltraum. Zudem betrifft die vorliegende Erfindung ein System zum Entgegenwirken gegen ein Zielobjekt im Weltraum. Des Weiteren betrifft die Erfindung die Verwendung der Vorrichtung zum Entgegenwirken gegen ein Zielobjekt im Weltraum und/oder Unschädlichmachen eines Zielobjekts im Weltraum.

### HINTERGRUND DER ERFINDUNG

Weltrauminfrastruktur, die beispielsweise zur Satellitenkommunikation und - navigation, zur Erdbeobachtung, oder dergleichen dienen kann, wird mittlerweile umfangreich von technischen Systemen genutzt und kann demensprechend als kritische, d.h. besonders bedeutende bzw. schützenswerte, Infrastruktur erachtet werden. Die Weltrauminfrastruktur, wie etwa Satelliten, Raumstationen oder dergleichen, kann jedoch Bedrohungen ausgesetzt sein. Neben herumfliegenden Weltraumschrott kann eine solche Bedrohung auch durch militärische Mittel oder andere Störer gegeben sein. Es besteht daher der Wunsch nach einer Möglichkeit, Bedrohungen für die Weltrauminfrastruktur zumindest zu verringern.

EP 718 590 A1 beschreibt, dass eine Vielzahl von Objekten mit geringer Geschwindigkeit in radialer Richtung freigesetzt wird, um ein vorgegebenes Freisetzungsmuster zu erzielen. Die Vorrichtung umfasst ein Innenwandelement, einen ringförmigen Sprengkörper mit geringer Geschwindigkeit, mindestens eine erste Anzahl von Objekten in einer ersten ringförmigen Anordnung und eine zweite Anzahl von Objekten in einer zweiten ringförmigen Anordnung, die koaxial zum und außerhalb des ringförmigen Sprengkörpers angeordnet ist. Die Anordnungen befinden sich an unterschiedlichen Positionen entlang der Länge des ringförmigen Sprengkörpers, sodass die Objekte in jeder Anordnung eine andere Energiemenge erhalten als die Objekte in der benachbarten Anordnung. Jedes Objekt besitzt eine Form, die aerodynamisch bedingte Abweichungen seiner Flugbahn während der Freisetzung minimiert.

Die Objekte können in einer Matrix aus einem synthetischen Polymermaterial mit hohlen Glasmikrokügelchen angeordnet sein.

DE 10 2012 006 553 A1 beschreibt ein Schutz-Satelliten- und/oder Raketensystem bestehend aus einer Mehrzahl von Satelliten und/oder Raketen zur Verteidigung der Erde gegenüber kollidierender Objekte, insbesondere gegen Objekte aus dem Weltraum, wobei das System aus einer Mehrzahl von Satelliten und/oder Raketen besteht, welche in gleichen oder unterschiedlichen Höhen über der Erde positioniert sind und einen virtuellen Gürtel oder Kreisbogen über der Erde bilden, wobei jeder Satellit und/oder jede Rakete mit einem Antriebssystem sowie mit wenigstens einer Energie-Erzeugungs- und/oder Versorgungseinheit ausgerüstet ist und über eigene Erfassungs- und Kommunikationsmittel verfügt und wobei die Satelliten und/oder Raketen mit Explosionsvorrichtungen ausgerüstet sind.

US 8 575 526 B1 beschreibt ein Abfangsystem und ein Verfahren zum Ausbringen mehrerer Abfangkörper, umfassend: ein Trägerfahrzeug mit einer zentralen Trägerfahrzeugachse und einem in das Trägerfahrzeug integrierten axialen Antrieb, einen mit dem Trägerfahrzeug verbundenen Nutzlastadapter zum Verbinden einer Nutzlast mit einem Boosterfahrzeug, wobei sich der Nutzlastadapter hinter dem Trägerfahrzeug befindet, und mehrere Abfangkörper, die radial um den Umfang des Trägerfahrzeugs herum angebracht sind.

US 2012/241562 A1 beschreibt ein Verfahren zur Beseitigung von Weltraumschrott mit relativ niedrigem ballistischen Koeffizienten durch Beschleunigung des Bahnverfalls des Schrotts. Dabei wird in einer Höhe von mindestens 10 km über der Erde eine kurzlebige Gaswolke erzeugt. Die Dichte dieser Wolke ist ausreichend, um den Schrott so weit abzubremsen, dass er in die Erdatmosphäre eintritt.

EP 1 989 501 A2 beschreibt einen Außeratmosphärenbasierter Mehrfachabschussraumfahrzeug-Abfänger bzw. MKV-Abfänger zum Abfangen von Zielen. Dieser umfasst eine Schubstufe, mehrere autonome Abschussraumfahrzeuge und einen Trägerraumfahrzeug-Adapter zum Tragen der Abschussraumfahrzeuge.

### ZUSAMMENFASSUNG DER ERFINDUNG

Aufgabe der Erfindung ist es, mit konstruktiv möglichst einfachen Mitteln eine möglichst effektive Möglichkeit zum Schutz von Weltrauminfrastruktur zu schaffen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem ersten Aspekt wird eine Vorrichtung zum Entgegenwirken gegen ein Zielobjekt im Weltraum vorgeschlagen. Die Vorrichtung weist wenigstens einen Raumflugkörper auf, der dazu eingerichtet ist, sich basierend auf Zieldaten dem Zielobjekt anzunähern. Zudem weist die Vorrichtung einen Effektor auf. Der Effektor ist oder wird von dem Raumflugköper getragen. Zudem weist der Effektor wenigstens ein substanzgefülltes Kapselgeschoss zum Ausbringen auf das Zielobjekt auf.

Die vorgeschlagene Vorrichtung ermöglicht es mit konstruktiv einfachen Mitteln, einen effektiven Schutz für Weltrauminfrastruktur gegen eine Bedrohung zu schaffen, die durch das Zielobjekt gegeben sein kann. Die Vorrichtung kann so betrieben werden, dass mittels des Raumflugkörpers und/oder des Effektors das Zielobjekt zumindest teilweise oder vollständig funktionsunfähig oder anderweitig zumindest unschädlicher gemacht wird, so dass die durch das Zielobjekt bewirkte Bedrohung zumindest teilweise oder weitestgehend beseitigt wird. Durch das wenigstens eine substanzgefüllte Kapselgeschoss und/oder die entsprechende Substanz kann die Funktion des Zielobjekts gestört oder außer Kraft gesetzt werden. Beispielsweise könnte ein Klebstoff oder dergleichen die mechanischen Fähigkeiten des Zielobjekts, wie z.B. das Nachführen von Solarpaneelen, behindern. Farben könnten beispielsweise die Stromproduktion von Solarpaneelen behindern. Nicht UV-Beständige Farben könnten nur einen temporären Effekt haben. Je nach Füllung des Kapselgeschosses kann das Zielobjekt temporär oder permanent in der Missionsausführung behindert werden. Es können auch mehrere Kapselgeschosse derart angeordnet werden, dass bei Ausbringung der Kapselgeschosse in Richtung des Zielobjekts eine Streuung der Kapselgeschosse bewirkt wird. Die Vorrichtung kann eine Beschädigung, Fragmentierung des Raumflugkörpers und/oder eine Fragmentierung des Zielobjekts zumindest weitestgehend vermeiden, so dass zumindest das Risiko verringert werden kann, durch das Entgegenwirken gegen das Zielobjekt zusätzlichen Weltraumschrott zu erzeugen. Auf dem Zielorbit nähert sich der Raumflugkörper dem Ziel an. Zum Zeitpunkt des Einsatzes des Effektors, ist die Geschwindigkeitsdifferenz zwischen Ziel und dem Raumflugkörper so, dass die Kapseln beim Aufschlag auf dem Ziel zerplatzen das Ziel aber keinen Mechanischen Schaden erleidet.

Wie hierin verwendet, kann unter dem Raumflugkörper jeder weltraumtaugliche Flugkörper verstanden werden, der dazu eingerichtet ist, sich dem Zielobjekt im Weltraum anzunähern. Der Raumflugkörper kann beispielsweise ein Raumfahrzeug, eine Raumsonde, ein künstlicher Satellit, eine Rakete, oder dergleichen sein. Der Raumflugkörper kann eine weltraumtaugliche Struktur aufweisen, die zum Tragen des Effektors geeignet ist. Zudem kann der Raumflugkörper in zumindest einigen Weiterbildungen wenigstens eines der folgenden Mittel aufweisen: einen bordeigenen Antrieb, eine bordeigene Energieversorgung, ein bordeigenes Steuersystem, das dazu eingerichtet ist, den Raumflugkörper zu steuern und/oder zu manövrieren, eine bordeigene Recheneinrichtung, wie etwa einen Computer, Prozessor, oder dergleichen, ein Lagekontrollsystem, z.B. Attitude Determination and Control System (ACS), ein Kommunikationssystem, ein System zur Führung, Navigation und Steuerung, z.B. Guidance Navigation and Control (GNC), und/oder wenigstens einen Suchkopf.

Der Raumflugkörper kann dazu eingerichtet sein, die Zieldaten zu empfangen, beispielsweise aus der Ferne, z.B. unter Nutzung eines Kommunikationssystems, von einem bordeigenen Datenspeicher, oder dergleichen. Die Zieldaten können basierend auf wenigstens einer Erfassungseinrichtung, wie etwa einem Sensor, einem Sensornetzwerk oder dergleichen, erzeugt werden und das Zielobjekt identifizierbar machen bzw. diesem zugeordnet sein. Die Zieldaten können basierend auf Beobachtungen aus dem Weltraum und/oder von der Erde aus erzeugt werden. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystems, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt angeben, der beispielsweise basierend auf Daten der Erfassungseinrichtung, z.B. auch unter Einbeziehung astronomischen Wissens, berechnet werden kann. Die Vorrichtung kann dazu eingerichtet sein, basierend auf den Zieldaten hin zu dem Zielobjekt zu manövrieren, z.B. die Geschwindigkeit und/oder Lage des Raumflugkörpers und/oder des Effektors an das Zielobjekt anzupassen. Alternativ oder zusätzlich dazu, kann die Vorrichtung auch dazu eingerichtet sein, das Zielobjekt basierend auf bordeigenen Mitteln, beispielsweise basierend auf einem bordeigenen Suchkopf, anzunähern. Das Annähern des Raumflugkörpers und/oder des Effektors an das Zielobjekt kann auf dem gleichen oder einem ähnlichen, z.B. nahen oder benachbarten, Orbit, d.h. Umlaufbahn, der Erde erfolgen, auf der sich das Zielobjekt befindet. Der Raumflugkörper kann dazu eingerichtet sein, sich mittels des Suchkopfes zielgeführt an das Zielobjekt anzunähern. Suchköpfe und deren Funktion sind im vorliegenden technischen Gebiet bekannt, so dass eine genauere Beschreibung des Suchkopfes entbehrlich ist. Prinzipiell kann ein solcher Suchkopf einen oder mehrere Sensoren aufweisen. Der wenigstens eine Suchkopf kann auch als Sucher bezeichnet werden. Mittels einer Steuereinrichtung können die Sensorinformationen in Steuerbefehle umgesetzt werden, mit denen die Flugrichtung des Raumflugkörpers beeinflusst werden kann. Der Suchkopf kann eine bordeigene Zielführung erlauben.

Wie hierin verwendet, kann unter dem Effektor jede Einrichtung verstanden werden, die dazu eingerichtet ist, dem Zielobjekt entgegenzuwirken, z.B. nach Art einer Waffe. Das Entgegenwirken kann beispielsweise auch ein Abfangen, Abwehren oder dergleichen des Zielobjekts umfassen. Das Zielobjekt kann beispielsweise auch ein militärisch genutztes Objekt sein. Der Effektor kann jede Einrichtung sein, die dazu eingerichtet ist, das Zielobjekt derart außer Funktion zu setzen, dass die Schädlichkeit des Zielobjekts für die zu schützende Weltrauminfrastruktur zumindest verringert oder das Zielobjekt zumindest im Wesentlichen unschädlich gemacht wird.

Gemäß einer Weiterbildung kann die Vorrichtung ferner wenigstens eine Kammer zum Aufnehmen des wenigstens einen Kapselgeschosses aufweisen. Die Kammer kann eine wahlweise verschließbare oder zu öffnende Öffnung aufweisen, die zu einer Stirnseite des Raumflugkörpers in dessen bestimmungsgemäßer Bewegungsrichtung hin ausgerichtet ist. Es können auch zwei, drei, vier oder mehr Kammern vorgesehen sein.

In einer Weiterbildung kann die Vorrichtung und/oder der Effektor ferner eine Rückhalteeinrichtung aufweisen, die sich zum wahlweisen Rückhalten und Freigeben des wenigstens einen Kapselgeschosses betätigen lässt. Beispielsweise kann die Rückhaltevorrichtung eine Klappe aufweisen, die die oben erwähnte Kammer bzw. deren Öffnung verschließen kann. Die Klappe kann zum Freigeben des wenigstens einen Kapselgeschosses geöffnet werden.

Gemäß einer Weiterbildung kann die Vorrichtung dazu eingerichtet sein, den Raumflugkörper auf das Zielobjekt auszurichten, die Rückhalteeinrichtung zum Freigeben des wenigstens einen Kapselgeschosses zu betätigen und den Raumflugkörper bei freigegebenem wenigstens einen Kapselgeschoss abzubremsen. Beispielsweise kann der Raumflugkörper und/oder der Effektor in Reichweite zu dem Zielobjekt angenähert werden. Der Raumflugkörper und/oder der Effektor kann auf das Zielobjekt ausgerichtet werden, beispielsweise mittels eines Lagekontrollsystems, z.B. Attitude Determination and Control System (ACS), eines oder mehrerer Triebwerke, oder dergleichen. Der ausgerichtete Raumflugkörper und/oder der Effektor kann abgebremst werden. Dabei kann sich das freigegebene wenigstens eine Kapselgeschoss mit zumindest weitestgehend unverminderter Geschwindigkeit auf das Zielobjekt zu bewegen bzw. zufliegen und auf das Zielobjekt aufprallen und zerplatzen. Zum Zeitpunkt des Einsatzes des Effektors kann eine Geschwindigkeitsdifferenz zwischen Raumflugkörper und/oder Effektor und dem Zielobjekt so gewählt sein, dass das Zielobjekt durch den Effektor nicht fragmentiert wird, um so Weltraumschrott zu vermeiden. Aus dem zerplatzten wenigstens einen Kapselgeschoss kann die Substanz auf das Zielobjekt austreten und dort seine Wirkung entfalten. Es ist möglich, dass die Wirkung des Effektors von dem Raumflugkörper aus, z.B. mittels Sensorik und/oder seines Suchkopfes, beobachtet wird. Zudem ist es möglich, den Raumflugkörper auf eine abstürzende Umlaufbahn zu bringen.

Das wenigstens eine Kapselgeschoss weist eine zerbrechliche Hülle auf. In der Hülle befindet sich die Substanz. Das wenigstens eine Kapselgeschoss und/oder seine Hülle kann so ausgelegt sein, dass das Zielobjekt nicht fragmentiert, um so Weltraumschrott zu vermeiden.

Gemäß einer Weiterbildung kann eine in das wenigstens eine Kapselgeschoss gefüllte Substanz zähflüssig oder flüssig sein. Dadurch kann sich die Substanz auf dem Zielobjekt verteilen bzw. dieses benetzen, bedecken, oder dergleichen.

Die in das wenigstens eine Kapselgeschoss gefüllte Substanz weist ein Farbmittel auf. Beispielsweise kann eine Farbe die Stromproduktion von Solarpaneelen behindern. Eine nicht UV-beständige Farbe könnte nur einen temporären Effekt haben.

Alternativ oder zusätzlich, weist die in das wenigstens eine Kapselgeschoss gefüllte Substanz einen Klebstoff auf. Beispielsweise kann ein Klebstoff mechanischen Fähigkeiten des Zielobjekts, wie z. B. das Nachführen von Solarpaneelen, behindern.

Es sei angemerkt, dass eine Mehrzahl von Kapselgeschossen vorgesehen sein kann, die zumindest teilweise zueinander unterschiedliche Substanzen aufweisen. Damit lassen sich unterschiedliche Effekte des Effektors erreichen.

In einer Weiterbildung kann der Effektor eine Mehrzahl von Kapselgeschossen aufweisen, die bezogen auf eine dem Zielobjekt zuwendbare oder zugewandte Stirnseite des Raumflugkörpers verteilt angeordnet sind. Durch gezielte Asymmetrien beim Absetzen der Kapselgeschosse kann es zu einer Streuung der Kapselgeschosse kommen, die die Trefferfläche vergrößert.

Ein zweiter Aspekt bezieht sich auf die Verwendung einer Vorrichtung zum Entgegenwirken gegen ein Zielobjekt im Weltraum und/oder Unschädlichmachen eines Zielobjekts im Weltraum. Dabei wird ein Raumflugkörper, der einen Effektor aufweist, der von dem Raumflugköper getragen ist und wenigstens ein substanzgefülltes Kapselgeschoss zum Ausbringen auf das Zielobjekt aufweist, basierend auf Zieldaten dem Zielobjekt angenähert, und das wenigstens eine Kapselgeschoss weist eine substanzgefüllte zerbrechliche Hülle auf, die so ausgestaltet ist, dass sie beim Aufprall auf das Zielobjekt zerplatzt, wobei eine in das Kapselgeschoss gefüllte Substanz freigesetzt wird, die ein Farbmittel und/oder einen Klebstoff aufweist.

Die Vorrichtung kann gemäß dem ersten Aspekt und dessen Weiterbildungen beliebig weitergebildet werden.

Gemäß einer Weiterbildung kann der Raumflugkörper von der Erde aus hin zu dem Zielobjekt gestartet und/oder verbracht werden. Hierzu kann eine Startvorrichtung und/oder eine Verbringungsvorrichtung vorgesehen sein, die zum Start und/oder Verbringen des Raumflugkörpers von Land, Wasser oder Luft eingerichtet sein kann. Damit kann der Raumflugkörper bei Bedarf, z.B. bei Bestimmung des Zielobjekts als potenzielle Bedrohung, von der Erde aus gestartet und/oder verbracht werden.

In einer Weiterbildung kann der Raumflugkörper als dedizierter Satellit im Weltraum vorgehalten und von dort aus dem Zielobjekt angenähert werden. Beispielsweise kann der Raumflugkörper und/oder der Effektor bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Gemäß einer Weiterbildung kann der Raumflugkörper von einem Satelliten getragen und von dort aus hin zu dem Zielobjekt gestartet werden. Beispielsweise können ein oder mehrere Raumflugkörper und/oder Effektoren an oder auf dem zu schützenden Satelliten installiert sein. Dabei können der Satellit und der Raumflugkörper und/oder der Effektor gemeinsam gestartet bzw. in den Weltraum verbracht werden. Dies bildet ein Selbstverteidigungssystem für den Satellit, wobei das Prinzip auch auf andere Weltrauminfrastruktur anwendbar ist.

Ein dritter Aspekt stellt ein System zum Entgegenwirken gegen ein Zielobjekt im Weltraum zur Verfügung. Das System weist wenigstens eine Erfassungseinrichtung auf, die dazu eingerichtet ist, das Zielobjekt zum Erzeugen von Zieldaten zu erfassen. Zudem weist das System eine Vorrichtung gemäß dem ersten Aspekt auf.

Die wenigstens eine Erfassungseinrichtung kann wenigstens einen Sensor, ein Sensornetzwerk oder dergleichen aufweisen, die im Weltraum und/oder der Erde angeordnet sein können. Die auf der wenigstens einen Erfassungseinrichtung basierenden Zieldaten können basierend auf Beobachtungen aus dem Weltraum und/oder von der Erde aus erzeugt werden. Beispielsweise können die Zieldaten von einem Weltraumüberwachungssystem oder unter Nutzung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden.

Das System kann gemäß dem ersten Aspekt und/oder dem zweiten Aspekt und deren jeweiligen Weiterbildungen weitergebildet werden.

Gemäß einer Weiterbildung kann das System ferner eine Startvorrichtung und/oder eine Verbringungsvorrichtung aufweisen. Die Startvorrichtung und/oder Verbringungsvorrichtung kann dazu eingerichtet sein, den Raumflugkörper von der Erde aus hin zu dem Zielobjekt zu starten.

Beispielsweise kann der wenigstens eine Raumflugkörper in der Verbringungsvorrichtung durch die Startvorrichtung integriert werden. Die Startvorrichtung kann eine mechanische und/oder elektrische Schnittstelle und/oder eine Datenschnittstelle zwischen der Verbringungsvorrichtung und dem Raumflugkörper ausbilden. Optional kann vorgesehen sein, dass vor dem Start der Raumflugkörper von der Verbringungsvorrichtung, mit Energie versorgt wird. Die Startvorrichtung kann dazu ausgelegt sein, dass ein Suchkopf des Raumflugkörpers ein Sichtfeld aus der Startvorrichtung heraus hat. Dadurch kann der Suchkopf seine Daten, z.B. Bilddaten usw., an z.B. das C2 System zurückmelden, um Bedrohungen in Suchkopfreichweite zu erkennen und zu identifizieren. Es ist auch möglich, den Suchkopf bereits vor dem Start auf das Ziel aufzuschalten (Lock-on-before-launch). Die mechanische Schnittstelle kann den Raumflugkörper während der Verbringung bis zum Start arretieren. Beim Start kann die Arretierung, z.B. signalgesteuert, gelöst werden. Der Raumflugkörper kann dann mittels seines Antriebs aus der Startvorrichtung heraus beschleunigt werden.

In einer Weiterbildung kann das System ferner einen Satelliten aufweisen. Der Satellit kann dazu eingerichtet sein, den Raumflugkörper zu tragen, wobei der Raumflugkörper von dem Satelliten aus hin zu dem Zielobjekt startbar ist. Hierbei kann der Raumflugkörper und/oder der Effektor als Selbstverteidigungssystem für den Satellit dienen. Der Raumflugkörper und/oder der Effektor kann dort warten, bis das Zielobjekt in Reichweite ist und kann dann von dem Satelliten aus gestartet werden.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: schematisch eine exemplarische Vorrichtung mit Raumflugkörper und Effektor gemäß einem Ausführungsbeispiel.
- Fig. 2: schematisch eine exemplarische ein exemplarisches Kapselgeschoss eines Effektors 120 gemäß einem Ausführungsbeispiel.
- Fig. 3: schematisch eine exemplarische Vorrichtung mit Raumflugkörper und Effektor gemäß einem Ausführungsbeispiel.
- Fig. 4: schematisch eine exemplarische Vorrichtung mit Raumflugkörper und Effektor gemäß einem Ausführungsbeispiel.
- Fig. 5: schematisch ein exemplarisches System mit Raumflugkörper und Effektor gemäß einem Ausführungsbeispiel.
- Fig. 6: in einem Flussdiagramm mögliche Aktivitäten bezogen auf eine Vorrichtung und/oder einen Raumflugkörper in einer Startvorrichtung, gemäß einem Ausführungsbeispiel.
- Fig. 7: in einem Flussdiagramm einen möglichen Ablauf bei Verwendung eines Systems mit Raumflugkörper und Effektor gemäß einem Ausführungsbeispiel.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

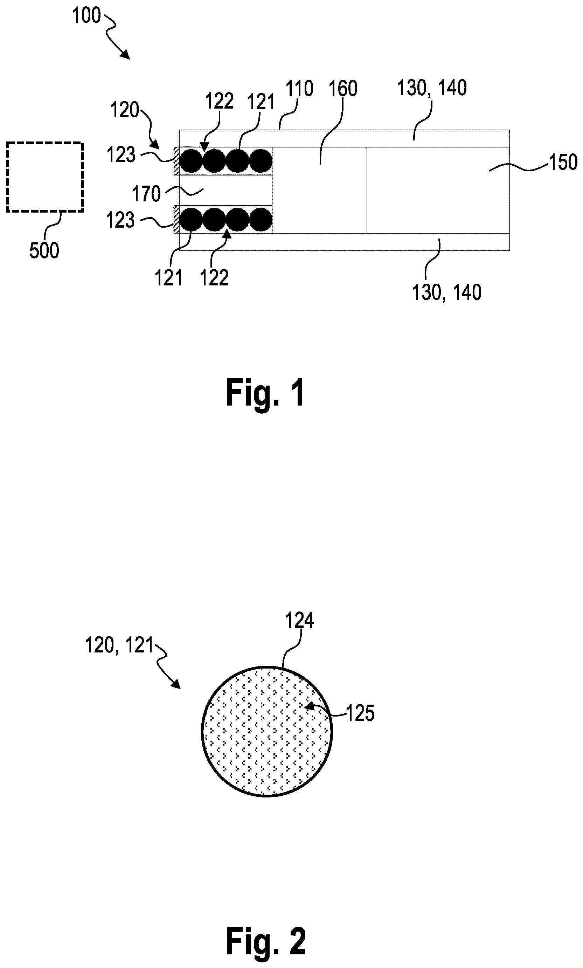

Fig. 1 zeigt in einer schematischen Draufsicht eine exemplarische Vorrichtung 100, die dazu eingerichtet ist, einem Zielobjekt 500 im Weltraum entgegenzuwirken.

Die Vorrichtung 100 weist wenigstens einen Raumflugkörper 110 auf. Der Raumflugkörper 110 ist dazu eingerichtet, sich basierend auf Zieldaten dem Zielobjekt 500 anzunähern. Zudem weist die Vorrichtung einen Effektor 120 auf. Der Effektor 120 ist oder wird von dem Raumflugköper 110 getragen. Zudem weist der Effektor 120 wenigstens ein substanzgefülltes Kapselgeschoss 121 zum Ausbringen, Absetzen, oder dergleichen auf das Zielobjekt 500 auf.

In zumindest einigen Ausführungsbeispielen kann die Vorrichtung 100 und/oder der Effektor 120 ferner wenigstens eine Kammer 122 zum Aufnehmen des wenigstens einen Kapselgeschosses 121 aufweisen. Die Kammer 122 kann eine wahlweise verschließbare oder zu öffnende Öffnung aufweisen, die zu einer Stirnseite des Raumflugkörpers 110 in dessen bestimmungsgemäßer Bewegungsrichtung hin ausgerichtet ist. Es können auch zwei, drei, vier oder mehr Kammern 122 vorgesehen sein.

Zudem kann, in zumindest einigen Ausführungsbeispielen, die Vorrichtung 100 und/oder der Effektor ferner wenigstens eine Rückhalteeinrichtung 123 aufweisen, die sich zum wahlweisen Rückhalten und Freigeben des wenigstens einen Kapselgeschosses 121, z.B. mittels eines ansteuerbaren Aktuators oder dergleichen, betätigen lässt. Beispielsweise kann die Rückhaltevorrichtung 123 eine Klappe aufweisen, die die oben erwähnte Kammer 122 bzw. deren Öffnung verschließen kann. Die Klappe kann zum Freigeben des wenigstens einen Kapselgeschosses 121 wahlweise geöffnet und zum Rückhalten des wenigstens einen Kapselgeschosses 121 geschlossen werden.

Das wenigstens eine Kapselgeschoss 121 weist eine Hülle 124 auf, die bei Aufprall auf das Zielobjekt 500 zum Zerbrechen, zum Zerplatzen oder dergleichen gebracht werden kann. In der Hülle 124 befindet sich eine Substanz 125. Das wenigstens eine Kapselgeschoss 121 und/oder seine Hülle 124 kann so ausgelegt sein, dass das Zielobjekt 500 nicht fragmentiert wird, um so Weltraumschrott zu vermeiden.

Des Weiteren kann, in zumindest einigen Ausführungsformen, die in das wenigstens eine Kapselgeschoss 121 gefüllte Substanz 125 zähflüssig oder flüssig sein. Die in das wenigstens eine Kapselgeschoss 121 gefüllte Substanz 125 weist ein Farbmittel auf. Beispielsweise kann eine Farbe die Stromproduktion von Solarpaneelen behindern. Eine nicht UV-beständige Farbe könnte nur einen temporären Effekt haben. Alternativ oder zusätzlich weist die in das wenigstens eine Kapselgeschoss 121 gefüllte Substanz 125 einen Klebstoff auf. Beispielsweise kann ein Klebstoff mechanischen Fähigkeiten des Zielobjekts, wie z. B. das Nachführen von Solarpaneelen, behindern. Es sei angemerkt, dass eine Mehrzahl von Kapselgeschossen 121 vorgesehen sein kann, die zumindest teilweise zueinander unterschiedliche Substanzen aufweisen. Damit lassen sich unterschiedliche Effekte des Effektors erreichen.

In zumindest einigen Ausführungsbeispielen kann die Vorrichtung 100 dazu eingerichtet sein, den Raumflugkörper 110 auf das Zielobjekt 500 auszurichten, die Rückhalteeinrichtung 123 zum Freigeben des wenigstens einen Kapselgeschosses 121 zu betätigen und den Raumflugkörper 110 bei freigegebenem wenigstens einen Kapselgeschoss 121 abzubremsen. Beispielsweise kann der Raumflugkörper 110 und/oder der Effektor 120 in Reichweite zu dem Zielobjekt 500 angenähert bzw. gebracht werden. Der Raumflugkörper 110 und/oder der Effektor 120 kann auf das Zielobjekt 500 ausgerichtet werden, beispielsweise mittels des Lagekontrollsystems, z.B. Attitude Determination and Control System (ACS), eines oder mehrerer Triebwerke, oder dergleichen. Der ausgerichtete Raumflugkörper 110 und/oder der Effektor 120 kann abgebremst werden. Dabei kann sich das freigegebene wenigstens eine Kapselgeschoss 121 mit zumindest weitestgehend unverminderter Geschwindigkeit auf das Zielobjekt 500 zubewegen bzw. zufliegen und auf das Zielobjekt 500 aufprallen und dabei zerplatzen. Zum Zeitpunkt des Einsatzes des Effektors 120 kann eine Geschwindigkeitsdifferenz zwischen Raumflugkörper 110 und/oder Effektor 120 und dem Zielobjekt 500 so gewählt sein, dass das Zielobjekt 500 durch den Effektor 120 nicht fragmentiert wird, um so Weltraumschrott zu vermeiden. Aus dem zerplatzten wenigstens einen Kapselgeschoss 121 kann die Substanz 125 auf das Zielobjekt 500 austreten und dort seine Wirkung entfalten. Es ist möglich, dass die Wirkung des Effektors 120 von dem Raumflugkörper 110 aus, z.B. mittels Sensorik und/oder seines Suchkopfes, beobachtet wird. Zudem ist es möglich, den Raumflugkörper 110 nach Einsatz des Effektors 120 auf eine abstürzende Umlaufbahn zu bringen.

In zumindest einigen Ausführungsbeispielen kann der Raumflugkörper 110 beispielsweise ein Raumfahrzeug, eine Raumsonde, ein künstlicher Satellit, eine Rakete, oder dergleichen sein. Der Raumflugkörper 110 kann eine weltraumtaugliche Struktur 130 aufweisen, die u.a. auch zum Tragen des Effektors 120 geeignet ist. Zudem kann der Raumflugkörper 110, z.B. die Struktur 130, ein Lagekontrollsystem 140, z.B. ein Attitude Determination and Control System (ACS), aufweisen, das zur Steuerung der Orientierung, Lage oder dergleichen des Raumflugkörpers 110 in Bezug auf einen Bezugsrahmen oder eine andere Entität wie beispielsweise die Himmelskugel, bestimmte Felder, nahe gelegene Objekte usw. eingerichtet ist. Es kann z.B. wenigstens einen Sensor, wenigstens einen Aktuator zum Aufbringen eines Moments zum Erreichen einer bestimmten Höhe, eine elektronische Steuerung oder dergleichen aufweisen. Des Weiteren kann der Raumflugkörper 110 in zumindest einigen Ausführungsbeispielen einen bordeigenen Antrieb 150, z.B. wenigstens ein Triebwerk oder dergleichen, und wenigstens eines der folgenden Mittel 160 aufweisen: eine bordeigene Energieversorgung, z.B. Photovoltaik, eine Batterie oder dergleichen, ein bordeigenes Steuersystem, z.B. mit wenigstens einem Zusatztriebwerk oder dergleichen, das dazu eingerichtet ist, den Raumflugkörper 110 zu steuern und/oder zu manövrieren, eine bordeigene Recheneinrichtung, wie etwa einen Computer, Prozessor, oder dergleichen, ein Kommunikationssystem, ein System zur Führung, Navigation und Steuerung, z.B. ein Guidance Navigation and Control (GNC) System. Des Weiteren kann der Raumflugkörper 110 in zumindest einigen Ausführungsbeispielen wenigstens einen Suchkopf 170 (engl. Seeker) aufweisen.

Es sei angemerkt, dass die Anordnung und/oder die Ausgestaltung der Komponenten der Vorrichtung 100 bzw. des Raumflugkörpers 110, d.h. des Effektors 120, der Struktur 130, des Lagekontrollsystems 140, z.B. Attitude Determination and Control System (ACS), des wenigstens einen Triebwerks 150 und des Suchkopfes 170, gemäß Fig. 1 lediglich exemplarisch ist und auch andere Anordnungen und/oder Ausgestaltungen möglich sind. Beispielsweise kann die jeweilige Anordnung und/oder Ausgestaltung auftrags- oder missionsabhängig gewählt werden. Zudem kann die jeweilige Anordnung und/oder Ausgestaltung in Abhängigkeit des Effektors 120, z.B. seines Typs, seiner Ausgestaltung, usw., gewählt werden.

Fig. 2 zeigt ein exemplarisches Kapselgeschoss 121 des Effektors 120. Wie oben erwähnt, kann das wenigstens eine Kapselgeschoss 121 eine Hülle 124 aufweisen, die bei Aufprall auf das Zielobjekt 500 zum Zerbrechen, zum Zerplatzen oder dergleichen gebracht werden kann. In der Hülle 124 kann sich die Substanz 125 befinden.

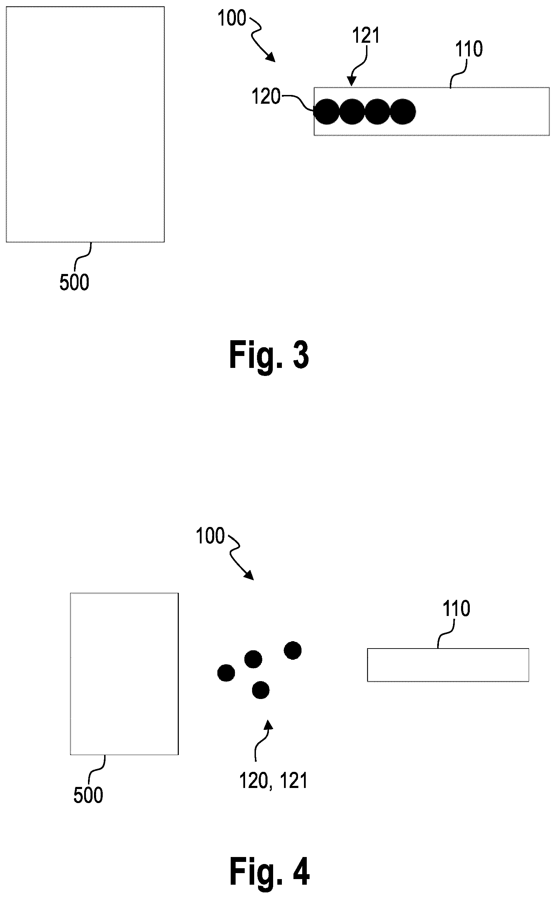

Fig. 3 und Fig. 4 zeigen in einer schematischen Ansicht einen möglichen Einsatz bzw. ein Wirkprinzip der Vorrichtung 100.

Gemäß Fig. 3 kann der Raumflugkörper 110 und/oder der Effektor 120 in Reichweite zu dem Zielobjekt 500 gebracht werden. Der Raumflugkörper 110 und/oder der Effektor 120 kann auf das Zielobjekt 500 ausgerichtet werden, beispielsweise mittels des Lagekontrollsystems, z.B. Attitude Determination and Control System (ACS), eines oder mehrerer Triebwerke, oder dergleichen.

Gemäß Fig. 4 kann dann der ausgerichtete Raumflugkörper 110 und/oder der Effektor 120 abgebremst werden. Dabei kann sich das freigegebene wenigstens eine Kapselgeschoss 121 mit zumindest weitestgehend unverminderter Geschwindigkeit auf das Zielobjekt 500 zubewegen bzw. zufliegen und auf das Zielobjekt 500 aufprallen und dabei zerplatzen. Zum Zeitpunkt des Einsatzes des Effektors 120 kann eine Geschwindigkeitsdifferenz zwischen Raumflugkörper 110 und/oder Effektor 120 und dem Zielobjekt 500 so gewählt sein, dass das Zielobjekt 500 durch den Effektor 120 nicht fragmentiert wird, um so Weltraumschrott zu vermeiden. Aus dem zerplatzten wenigstens einen Kapselgeschoss 121 kann die Substanz 125 auf das Zielobjekt 500 austreten und dort seine Wirkung entfalten. Es ist möglich, dass die Wirkung des Effektors 120 von dem Raumflugkörper 110 aus, z.B. mittels Sensorik und/oder seines Suchkopfes, beobachtet wird. Zudem ist es möglich, den Raumflugkörper 110 nach Einsatz des Effektors 120 auf eine abstürzende Umlaufbahn zu bringen.

Wie in Fig. 4 angedeutet, kann der Effektor 120 eine Mehrzahl von Kapselgeschossen 121 aufweisen, die bezogen auf eine dem Zielobjekt 500 zuwendbare oder zugewandte Stirnseite des Raumflugkörpers 110 verteilt angeordnet sind. Durch gezielte Asymmetrien beim Absetzen der Kapselgeschosse 121 kann es zu einer Streuung der Kapselgeschosse 121 kommen, die die Trefferfläche vergrößert.

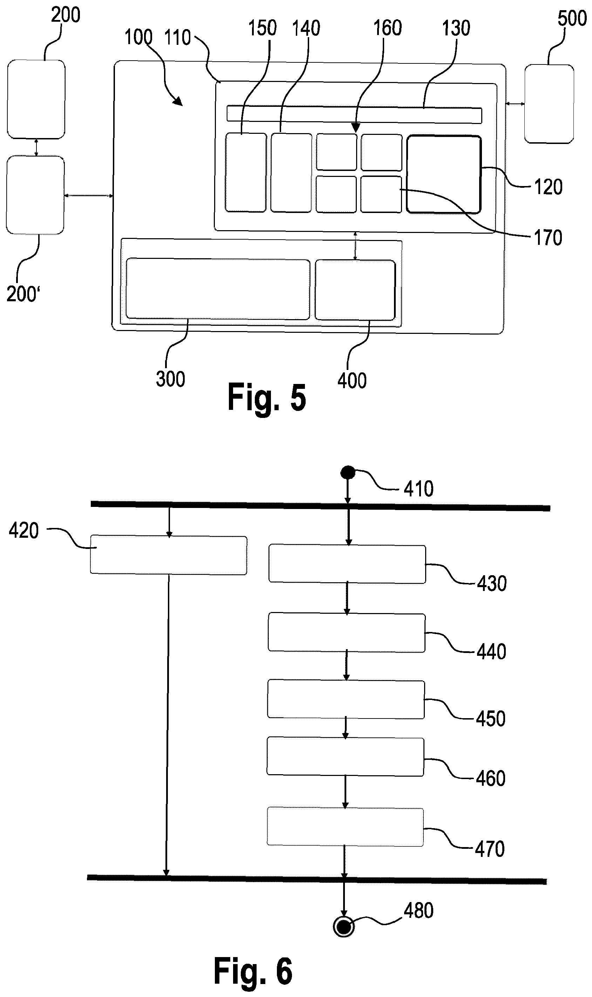

Fig. 5 zeigt in einem Blockdiagramm ein exemplarisches System 10 zum Entgegenwirken gegen ein Zielobjekt 500 im Weltraum.

Das System 10 weist die Vorrichtung 100 auf, die gemäß einem oder mehreren der hierin beschriebenen Ausführungsbeispielen ausgebildet sein kann. Dementsprechend kann der Effektor 120 gemäß einem oder mehreren der hierin beschriebenen Ausführungsbeispiele ausgeführt sein.

Das System 10 weist zudem wenigstens eine Erfassungseinrichtung 200, 200' auf, die dazu eingerichtet ist, das Zielobjekt zum Erzeugen von Zieldaten zu erfassen. Die wenigstens eine Erfassungseinrichtung 200, wie etwa ein Sensor, ein Sensornetzwerk oder dergleichen, kann dazu eingerichtet sein, die Zieldaten basierend auf Beobachtungen aus dem Weltraum und/oder von der Erde aus zu erzeugen. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystems, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt 500angeben, der beispielsweise basierend auf Daten der Erfassungseinrichtung, z.B. auch unter Einbeziehung astronomischen Wissens, berechnet werden kann.

In zumindest einigen Ausführungsbeispielen kann das System 10 ferner eine Verbringungsvorrichtung 300 zum Verbringen der Vorrichtung 100 aufweisen. Zudem kann das System eine Startvorrichtung 400 zum Starten des Raumflugkörpers 110 aufweisen. Die Startvorrichtung 400 und/oder die Verbringungsvorrichtung 300 kann dazu eingerichtet sein, die Vorrichtung 100 und/oder den Raumflugkörper 110 von der Erde aus hin zu dem Zielobjekt 500 zu starten.

Beispielsweise kann der wenigstens eine Raumflugkörper 110 in der Verbringungsvorrichtung 300 durch die Startvorrichtung 400 integriert werden. Die Startvorrichtung 400 kann eine mechanische und/oder elektrische Schnittstelle und/oder eine Datenschnittstelle zwischen der Verbringungsvorrichtung und dem Raumflugkörper 110 ausbilden. Optional kann vorgesehen sein, dass vor dem Start der Raumflugkörper 110 von der Verbringungsvorrichtung 300, mit Energie versorgt wird. Die Startvorrichtung 400 kann dazu ausgelegt sein, dass der Suchkopf 170 des Raumflugkörpers 110 ein Sichtfeld aus der Startvorrichtung 400 heraus hat. Dadurch kann der Suchkopf 170 seine Daten, z.B. Bilddaten usw., an z.B. das C2 System zurückmelden, um Bedrohungen in Suchkopfreichweite zu erkennen und zu identifizieren. Es ist auch möglich, den Suchkopf 170 bereits vor dem Start auf das Ziel aufzuschalten (Lock-on-before-launch). Die mechanische Schnittstelle kann den Raumflugkörper 110 während der Verbringung bis zum Start arretieren. Beim Start kann die Arretierung, z.B. signalgesteuert, gelöst werden. Der Raumflugkörper 110 kann dann mittels seines Antriebs 150 aus der Startvorrichtung 400 heraus beschleunigt werden.

Weiter beispielweise kann das System 10 ferner einen Satellit aufweisen. Der Satellit kann dazu eingerichtet sein, den Raumflugkörper 110 zu tragen, wobei der Raumflugkörper 110 von dem Satellit aus hin zu dem Zielobjekt 500 startbar ist. Hierbei kann der Raumflugkörper 110 und/oder der Effektor 120 als Selbstverteidigungssystem für den Satellit dienen. Der Raumflugkörper 110 und/oder der Effektor 120 kann dort warten, bis das Zielobjekt 500 in Reichweite ist und kann dann von dem Satellit aus gestartet werden.

Fig. 6 illustriert in einem Flussdiagramm mögliche Aktivitäten bezogen auf die Vorrichtung 100 und/oder den Raumflugkörper 110 in der Startvorrichtung 400.

Beginnend bei Block 410 befindet sich die Vorrichtung 100 und/oder der Raumflugkörper 110 in der Startvorrichtung 400. Block 420 gibt an, dass währenddessen der wenigstens eine Suchkopf 170 entsprechende Daten, z.B. auch Bilddaten, liefert, z.B. an das C2-System. Bei Block 430 gibt ein Bediener, z.B. ein Bediener des C2-Systems, einen Bekämpfungsbefehl. Gemäß Block 440 kann die bordeigene Energieversorgung des Raumflugkörpers 110 aktiviert werden. Bei Block 450 kann eine Arretierung für den Raumflugkörper 110 in der Startvorrichtung 400 deaktiviert, z.B. gelöst, werden. Gemäß Block 460 wird der Raumflugkörper 110 mittels seines Antriebs 150 beschleunigt. Bei Block 470 etabliert der Raumflugkörper 110 seine Kommunikation. Bei Block 480 befindet sich der Raumflugkörper 110 außerhalb der Startvorrichtung 100.

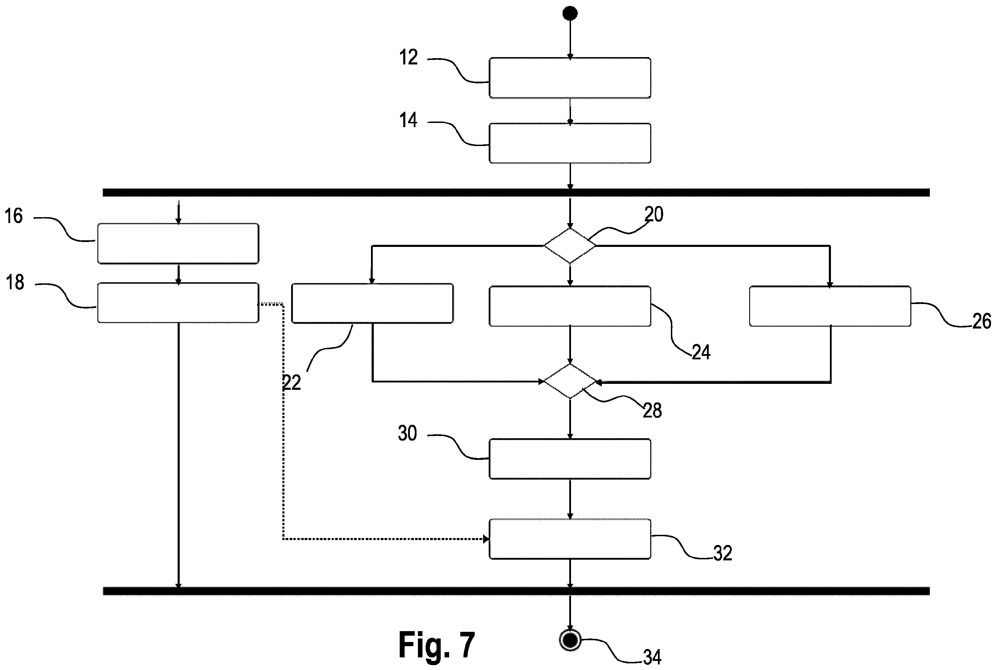

Fig. 7 illustriert in einem Flussdiagramm einen möglichen Ablauf bei Verwendung des Systems 10.

Beginnend bei Block 12 wird mittels der wenigstens einen Erfassungsvorrichtung 200, z.B. einem Space Situational Awareness (SSA)-Systems und/oder unter einem Führungs- und Kontrollsystem, z.B. C2 (Command & Control), eine mögliche Bedrohung durch das Zielobjekt 500 erkannt. Bei Block 14 gibt ein Bediener, z.B. ein Bediener des C2-Systems, einen Bekämpfungsbefehl. Gemäß Block 16 kann die wenigstens eine Erfassungsvorrichtung 200, 200' und/oder der wenigstens eine Suchkopf 170 das Zielobjekt 500 verfolgen. Gemäß Block 18 können Zielupdates erzeugt und/oder erhalten werden.

Block 20 deutet an, dass es verschiedene Anwendungs- und/oder Einsatzszenarien für die Vorrichtung 100 geben kann, wobei die Blöcke 22, 24 und 26 drei verschiedene Anwendungs- und/oder Einsatzszenarien angeben. Gemäß Block 22 kann der Raumflugkörper 110 von der Erde aus hin zu dem Zielobjekt 500 gestartet und/oder verbracht werden. Hierzu kann die Startvorrichtung 400 und/oder Verbringungsvorrichtung 300 vorgesehen sein, die zum Start und/oder Verbringen des Raumflugkörpers von Land, Wasser oder Luft eingerichtet sein kann. Damit kann der Raumflugkörper 110 bei Bedarf, z.B. bei Bestimmung des Zielobjekts als potenzielle Bedrohung, von der Erde aus gestartet und/oder verbracht werden. Gemäß Block 24 kann der Raumflugkörper 110 von einem Satellit getragen und von dort aus hin zu dem Zielobjekt 500 gestartet werden. Beispielsweise können ein oder mehrere Raumflugkörper 110 und/oder Effektoren 120 an oder auf dem zu schützenden Satellit installiert sein. Dabei können der Satellit und der Raumflugkörper 110 und/oder der Effektor 120 gemeinsam gestartet bzw. in den Weltraum verbracht werden. Dies bildet ein Selbstverteidigungssystem für den Satellit, wobei das Prinzip auch auf andere Weltrauminfrastruktur anwendbar ist. Gemäß Block 26 kann der Raumflugkörper 110 als dedizierter Satellit im Weltraum vorgehalten und von dort aus dem Zielobjekt 500 angenähert werden. Beispielsweise kann der Raumflugkörper 110 und/oder der Effektor 120 bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Bei Block 28 befindet sich das Zielobjekt 500 in Reichweite der Vorrichtung 100 und/oder des Raumflugkörpers 110. Bei Block 30 wird der Raumflugkörper 110 gestartet. Bei Block 32 nähert sich der Raumflugkörper 110 dem Zielobjekt 500 an, insbesondere auf Basis der Zieldaten. Bei Block 34 befindet sich der Raumflugkörper 110 in Reichweite zu dem Zielobjekt 500, um den Effektor 120 einzusetzen.

Die oben beschriebenen Aspekte, Ausgestaltungen, Varianten und Beispiele können miteinander kombiniert werden, ohne dass dies explizit beschrieben ist. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### BEZUGSZEICHENLISTE

- 10: System
- 12-34: Block von Flussdiagramm
- 100: Vorrichtung
- 110: Raumflugkörper
- 120: Effektor
- 121: Kapselgeschoss
- 122: Kammer
- 123: Rückhalteeinrichtung
- 124: Hülle
- 125: Substanz
- 130: Struktur
- 140: Lagekontrollsystem, z.B. Attitude Determination and Control System (ACS)
- 150: Antrieb
- 160: Mittel
- 170: Suchkopf
- 200: Erfassungseinrichtung
- 200': Erfassungseinrichtung
- 300: Verbringungsvorrichtung
- 400: Startvorrichtung
- 410-480: Block von Flussdiagramm
- 500: Zielobjekt

## Patentansprüche

1. Vorrichtung (100) zum Entgegenwirken gegen ein Zielobjekt (500) im Weltraum, aufweisend wenigstens einen Raumflugkörper (110), der dazu eingerichtet ist, sich basierend auf Zieldaten dem Zielobjekt (500) anzunähern, und einen Effektor (120), der von dem Raumflugkörper (110) getragen ist und wenigstens ein Kapselgeschoss (121) zum Ausbringen auf das Zielobjekt (500) aufweist,
**dadurch gekennzeichnet, dass**
das wenigstens eine Kapselgeschoss (121) eine substanzgefüllte, zerbrechliche Hülle (124) aufweist, die so ausgestaltet ist, dass sie beim Aufprall auf das Zielobjekt (500) zerplatzt, wobei eine in das Kapselgeschoss (121) gefüllte Substanz freigesetzt wird, die ein Farbmittel und/oder einen Klebstoff aufweist.

2. Vorrichtung nach Anspruch 1, ferner aufweisend wenigstens eine Kammer (122) zum Aufnehmen des wenigstens einen Kapselgeschosses (121).

3. Vorrichtung nach Anspruch 1 oder 2, ferner aufweisend eine Rückhalteeinrichtung (123), die sich zum wahlweisen Rückhalten und Freigeben des wenigstens einen Kapselgeschosses (121) betätigen lässt.

4. Vorrichtung nach Anspruch 3, wobei die Vorrichtung (100) dazu eingerichtet ist, den Raumflugkörper (110) auf das Zielobjekt (500) auszurichten, die Rückhalteeinrichtung (123) zum Freigeben des wenigstens einen Kapselgeschosses (121) zu betätigen und den Raumflugkörper (110) bei freigegebenem wenigstens einen Kapselgeschoss (121) abzubremsen.

5. Vorrichtung nach einem der vorhergehenden Ansprüche, wobei die in das wenigstens eine Kapselgeschoss (121) gefüllte Substanz zähflüssig oder flüssig ist.

6. Vorrichtung nach einem der vorhergehenden Ansprüche, wobei der Effektor (120) eine Mehrzahl von Kapselgeschossen (121) aufweist, die bezogen auf eine dem Zielobjekt (500) zuwendbare oder zugewandte Stirnseite des Raumflugkörpers (110) verteilt angeordnet sind.

7. Verwendung einer Vorrichtung (100) zum Entgegenwirken gegen ein Zielobjekt (500) im Weltraum und/oder Unschädlichmachen eines Zielobjekts (500) im Weltraum, wobei ein Raumflugkörper (110), der einen Effektor (120) aufweist, der von dem Raumflugkörper (110) getragen ist und wenigstens ein substanzgefülltes Kapselgeschoss (121) zum Ausbringen auf das Zielobjekt (500) aufweist, basierend auf Zieldaten dem Zielobjekt (500) angenähert wird, und wobei das wenigstens eine Kapselgeschoss (121) eine substanzgefüllte zerbrechliche Hülle (124) aufweist, die so ausgestaltet ist, dass sie beim Aufprall auf das Zielobjekt (500) zerplatzt, wobei eine in das Kapselgeschoss (121) gefüllte Substanz freigesetzt wird, die ein Farbmittel und/oder einen Klebstoff aufweist.

8. Verwendung nach Anspruch 7, wobei der Raumflugkörper (110) von der Erde aus hin zu dem Zielobjekt (500) gestartet und/oder verbracht wird.

9. Verwendung nach Anspruch 7, wobei der Raumflugkörper (110) als dedizierter Satellit im Weltraum vorgehalten und von dort aus dem Zielobjekt (500) angenähert wird.

10. Verwendung nach Anspruch 7, wobei der Raumflugkörper (110) von einem Satelliten getragen und von dort aus hin zu dem Zielobjekt (500) gestartet wird.

11. System (10) zum Entgegenwirken gegen ein Zielobjekt (500) im Weltraum, aufweisend:
wenigstens eine Erfassungseinrichtung (200, 200'), die dazu eingerichtet ist, das Zielobjekt (500) zum Erzeugen von Zieldaten zu erfassen, und
eine Vorrichtung (100) nach einem der Ansprüche 1 bis 6.

## Claims

1. Apparatus (100) for counteracting a target object (500) in space, comprising at least a spacecraft (110), set up to approach the target object (500) on the basis of target data, and an effector (120), carried by the spacecraft (110) and comprising at least one capsule projectile (121) for deployment at the target object (500),
**characterised in that**
the at least one capsule projectile (121) comprises a substance-filled fragile casing (124) configured to burst upon impact against the target object (500), releasing a substance which is filled into the capsule (121) and which comprises a dye and/or an adhesive.

2. Apparatus according to claim 1, further comprising at least one chamber (122) for receiving the at least one capsule projectile (121).

3. Apparatus according to either claim 1 or claim 2, further comprising a restraint device (123) which can be actuated to selectively restrain and release the at least one capsule projectile (121).

4. Apparatus according to claim 3, wherein the apparatus (100) is set up to align the spacecraft (110) towards the target object (500), to actuate the restraint device (123) to release the at least one capsule projectile (121) and to decelerate the spacecraft (110) when the at least one capsule projectile (121) has been released.

5. Apparatus according to any of the preceding claims, wherein the substance filled into the at least one capsule projectile (121) is viscous or liquid.

6. Apparatus according to any of the preceding claims, wherein the effector (120) comprises a plurality of capsule projectiles (121) which are arranged distributed with respect to an end face of the spacecraft (110) which is directed or can be directed towards the target object (500).

7. Use of an apparatus (100) for counteracting a target object (500) in space and/or rendering a target object (500) in space harmless, wherein a spacecraft (110) comprising an effector (120), carried by the spacecraft (110) and comprising at least one substance-filled capsule projectile (121) for deployment at the target object (500), is caused to approach the target object (500) on the basis of target data, and wherein the at least one capsule projectile (121) comprises a substance-filled fragile casing (124) configured to burst upon impact against the target object (500), releasing a substance which is filled into the capsule (121) and which comprises a dye and/or an adhesive.

8. Use according to claim 7, wherein the spacecraft (110) is launched and/or transported from Earth to the target object (500).

9. Use according to claim 7, wherein the spacecraft (110) is kept in space as a dedicated satellite and is caused to approach the target object (500) from there.

10. Use according to claim 7, wherein the spacecraft (110) is carried by a satellite and launched from there towards the target object (500).

11. System (10) for counteracting a target object (500) in space, comprising:
at least one recording device (200, 200'), set up to record the target object (500) so as to generate target data, and
an apparatus (100) according to any of claims 1 to 6.

## Revendications

1. Dispositif (100) de contre-mesure contre un objet cible (500) dans l'espace, comportant au moins un engin spatial (110), qui est conçu pour s'approcher de l'objet cible (500) sur la base de données de cible, et un effecteur (120) qui est porté par l'engin spatial (110) et qui présente au moins un projectile à capsule (121) destiné à être déployé sur l'objet cible (500),
**caractérisé en ce que**
l'au moins un projectile à capsule (121) comporte une enveloppe (124) facile à casser remplie d'une substance, qui est conçue de telle sorte qu'elle éclate lors de l'impact sur l'objet cible (500), une substance remplie dans le projectile à capsule (121) étant libérée, ladite substance comportant un colorant et/ou un adhésif.

2. Dispositif selon la revendication 1, comportant en outre au moins une chambre (122) destinée à recevoir l'au moins un projectile à capsule (121).

3. Dispositif selon la revendication 1 ou 2, comportant en outre un moyen de retenue (123) qui peut être actionné pour sélectivement retenir et libérer l'au moins un projectile à capsule (121).

4. Dispositif selon la revendication 3, dans lequel le dispositif (100) est conçu pour orienter l'engin spatial (110) en direction de l'objet cible (500), pour actionner le moyen de retenue (123) pour libérer l'au moins un projectile à capsule (121) et pour freiner l'engin spatial (110) lorsque l'au moins un projectile à capsule (121) a été libéré.

5. Dispositif selon l'une des revendications précédentes, dans lequel la substance remplie dans l'au moins un projectile à capsule (121) est visqueuse ou liquide.

6. Dispositif selon l'une des revendications précédentes, dans lequel l'effecteur (120) comporte une pluralité de projectiles à capsule (121), qui sont disposés de manière répartie par rapport à une face frontale de l'engin spatial (110) qui est ou peut être tournée vers l'objet cible (500).

7. Utilisation d'un dispositif (100) de contre-mesure contre un objet cible (500) dans l'espace et/ou de neutralisation d'un objet cible (500) dans l'espace, dans laquelle un engin spatial (110), qui comporte un effecteur (120) qui est porté par l'engin spatial (110) et qui comporte au moins un projectile à capsule (121) rempli d'une substance et destiné à être lancé sur l'objet cible (500), est approché de l'objet cible (500) sur la base de données de cible, et dans lequel l'au moins un projectile à capsule (121) compote une enveloppe (124) facile à casser remplie d'une substance, qui est conçue de telle sorte qu'elle éclate lors de l'impact sur l'objet cible (500), une substance remplie dans le projectile à capsule (121) étant libérée, ladite substance comportant un colorant et/ou un adhésif.

8. Utilisation selon la revendication 7, dans laquelle l'engin spatial (110) est lancé et/ou transféré vers l'objet cible (500) depuis la Terre.

9. Utilisation selon la revendication 7, dans laquelle l'engin spatial (110) est gardé dans l'espace en tant que satellite dédié et, à partir de là, approché de l'objet cible (500).

10. Utilisation selon la revendication 7, dans laquelle l'engin spatial (110) est porté par un satellite et lancé depuis celui-ci vers l'objet cible (500).

11. Système (10) de contre-mesure contre un objet-cible (500) dans l'espace, comportant :
au moins un moyen de détection (200, 200') qui est conçu pour détecter l'objet cible (500) pour générer des données de cible, et
un dispositif (100) selon l'une des revendications 1 à 6.
